# EUROPEAN PATENT APPLICATION

(11) **EP 4 375 048 A1**
(43) Date of publication of application: **29.05.2024**
(21) Application number: 22950053.3
(22) Date of filing: 02.11.2022
(51) Int. Cl.: B29C 55/00, C08K 5/20, C08L 67/04

(54) **POLYHYDROXYALKANOATE MOLDED BODY AND PREPARATION METHOD THEREFOR**

(30) Priority: 06.07.2022 CN 202210786480
(71) Applicant: Beijing Bluepha Microbiology Technology Co., Ltd., Changping District Beijing 102206 (CN); Jiangsu Lansu Biomaterial Co., Ltd., Yancheng, Jiangsu 224500 (CN)
(72) Inventor: WANG, Ruxu, Beijing 102206 (CN); MA, Yiming, Beijing 102206 (CN); LI, Teng, Beijing 102206 (CN); ZHANG, Haoqian, Beijing 102206 (CN)
(74) Representative: Stolmár & Partner Patentanwälte PartG mbB
(86) International application number: PCT/CN2022/129264
(87) International publication number: WO 2024/007494

(57) **Abstract**

The present invention relates to the technical field of high molecular materials, in particular to a polyhydroxyalkanoate molded body and a preparation method therefor. The preparation method comprises: mixing polyhydroxyalkanoate raw materials, processing same at a first temperature, and drawing same at a second temperature, wherein the first temperature is 10-60°C higher than the melting point of a polyhydroxyalkanoate resin; the second temperature is higher than the glass transition temperature of a hydroxyalkanoate resin and lower than the melting point of the polyhydroxyalkanoate resin; and during the preparation process, under the condition of the second temperature, the following conditions need to be met: the draw ratio is 1.0 time or more, and the heating time at the temperature T is 30 s or more; or, the draw ratio is 3.0 times or more, and the heating time at the temperature T is 10 s or more. In the present invention, by optimizing the processing technology, a non-sticky molded body can be prepared; and the preparation method is simple and controllable, and can improve the processing and production efficiency.

## Description

### Cross-reference to related application

The present application claims priority to Chinese Patent Application No. 202210786480.3, entitled "polyhydroxyalkanoate molded body and preparation method therefor", and filed on July 6, 2022, the entire disclosure of which is incorporated herein by reference in its entirety.

### Technical Field

The present application relates to the technical field of polymer materials, specifically, to a polyhydroxyalkanoate molded body and preparation method therefor.

### Background Art

Polyhydroxyalkanoates (hereinafter referred to as PHAs) are bio-based and biodegradable polymers in the marine environment that can solve environmental problems caused by waste plastics, and have excellent biocompatibility and mechanical properties, therefore, it has broad application prospects in the fields of packaging and biomedicine.

However, PHAs have the disadvantage of a slow crystallization rate during the process of hot processing to prepare molded body. Currently, adding nucleating agents and other additives is the main way to increase the crystallization rate of PHAs. At the same time, the molded bodies of PHA are prone to adhesion during the processing, resulting in a decline in the quality of the molded body. It is well-known in the art that the adhesion of molded body can be reduced by extending processing time, but it greatly reduces processing efficiency.

### Summary

The present application provides a PHA molded body and a preparation method thereof. By optimizing the processing process, a non-adhesive molded body can be produced. The preparation method is simple and controllable, and the processing and production efficiency can be improved at the same time.

Specifically, the present application first provides a preparation method for a molded body of PHA, comprising:
stretching at a temperature T; the temperature T refers to a temperature above the glass transition temperature of the PHA resin and below the melting point of the PHA resin;
stretching under the temperature T condition must meet the following requirements: a draw ratio of more than 1.0 times or more, and a heating time under the temperature T condition of 30 s or more;
   or,
a draw ratio of 3.0 times or more, and a heating time under the temperature T condition of 10 s or more.

The present application found that through the above method, it is possible to obtain a non-adhesive molded body while significantly reducing processing time.

Preferably, the preparation method comprises: mixing PHA raw materials, processing at a first temperature, and stretching at a temperature T;
wherein, the first temperature is 10°C to 60°C higher than the melting point of the PHA resin; and
the temperature T is a second temperature, which is 25°C to 100°C, more preferably 40°C to 80°C.

In the present application, when the second temperature is 40°C to 80°C, it is beneficial to quickly process non-adhesive molded bodies at a lower draw ratio, thereby further reducing processing time and processing costs. Wherein, if the first temperature is too low, insufficient melting may occur, which may reduce the draw ratio. If the first temperature is too high, thermal degradation of the PHA resin may occur, thereby affecting the performance of the molded body.

As a preferred embodiment, during the preparation process:
the draw ratio is 1.0 times or more, and the heating time at the second temperature is 30 s or more;
   or,
the draw ratio is 3.0 times or more, and the heating time at the second temperature is 15 s or more.

As a preferred embodiment, the second temperature is between 40°C to 80°C, and during the preparation process:
the draw ratio is 1.0 times or more, and the heating time at the second temperature is 60 s or more;
   or,
the draw ratio is 1.5 times or more, and the heating time at the second temperature is 30 s or more;
   or,
the draw ratio is 3.0 times or more, and the heating time at the second temperature is 10 s or more.

The words "or more" mentioned in the present application all include the present number. For example, if the draw ratio is 1.0 times or more, it means that the draw ratio is greater than or equal to 1.0 times; and the heating time of the second temperature is 15 s or more, it means that the heating time is greater than or equal to 15 s. Typically and without limitation, for example, the draw ratio can be 1.0 times or more, and the heating time of the second temperature can be 30 s or more; or, the draw ratio is 1.5 times or more, and the heating time of the second temperature is 30 s or more; or, the draw ratio is 3.0 times or more, and the heating time of the second temperature is 10 s, 30 s, or 60 s or more.

In specific embodiments, the processing can be carried out by water bath drawn strip cutting. In this processing method, the second temperature is the water bath temperature of the water tank. The draw ratio of the second temperature can be controlled by controlling the traction speed of each roller and the difference in the traction speed of each roller. The heating time of the second temperature can be controlled by controlling the traction speed and the length of the water tank for the water bath.

It is known in the prior art that cold drawing refers to a drawing process performed one or more times at a temperature which is set below the glass transition temperature +20°C, or below the glass transition temperature +10°C, or even below the glass transition temperature. Unlike the cold drawing process, the second temperature used in the present application utilizes the water bath temperature of the water tank in the processing equipment. Water bath drawing is performed directly after extrusion, which not only simplifies the production process but also facilitates production control, thereby reducing costs.

The main component of the PHA molded body of the present application can be a single PHA or a combination of two or more PHAs.

Preferably, the PHA contains a 3-hydroxyalkanoate structural unit and/or a 4-hydroxyalkanoate structural unit.

More preferably, the PHA contains a 3-hydroxyalkanoate structural unit.

As a preferred embodiment, the molar ratio of the 3-hydroxyalkanoate structural unit in the PHA is 50 mol% or more, more preferably 60 mol% or more, and even more preferably 75 mol% or more. The preparation method of the present application is suitable for resins with different proportions of 3-hydroxyalkanoate content. The different proportions mainly affect the crystallinity of the material itself. A person skilled in the art can choose resins with different 3-hydroxyalkanoate contents according to common knowledge.

In a specific embodiment, PHA may only contain one or two or more 3-hydroxyalkanoate structural units as structural units (especially the structural unit represented by Formula (1)) or may contain other structural units (such as 4-hydroxyalkanoate structural unit) in addition to one or two or more 3-hydroxyalkanoate structural units.

Preferably, the PHA is a polymer containing a structural unit as shown in the following Formula (1);

[CHRCH₂COO] (1)

In Formula (1), R is a straight-chain or branched alkyl group represented as CₚH₂ₚ₊₁, and p is an integer from 1 to 15.

Optionally, R is a straight-chain or branched alkyl group such as methyl, ethyl, propyl, butyl, isobutyl, tertbutyl, pentyl, and hexyl.

Preferably, p is an integer from 1 to 10; further preferably, p is an integer from 1 to 8.

The weight average molecular weight of the PHA component is not particularly limited. Preferably, the weight average molecular weight of the PHA is 100,000 to 1,000,000; more preferably 200,000 to 900,000; further preferably 300,000 and 800,000. When weight average molecular weight is less than 100,000, the mechanical properties of the molded body of the obtained PHA resin tend to decrease. On the other hand, when the weight average molecular weight exceeds 1,000,000, the mechanical load tends to increase and the productivity tends to decrease during melting processing.

Preferably, the 3-hydroxyalkanoate structural unit exists in the form of (R) 3-hydroxyalkanoate.

The manufacturing method of the PHA is not particularly limited and can be a manufacturing method using chemical synthesis or a manufacturing method using microorganisms. Wherein, a manufacturing method using microorganisms is preferred.

Preferably, the PHA contains a 3-hydroxybutyrate (hereinafter sometimes referred to as 3HB) structural unit.

More preferably, the 3-hydroxybutyrate structural unit exists in the form of (R) 3-hydroxybutyrate.

More preferably, the PHA contains a poly(3-hydroxybutyrate) resin, in which the average content proportions of 3-hydroxybutyrate structural unit is 70 to 99 mol%, preferably 89 to 99 mol%, more preferably 94 to 99 mol%.

When the PHA component constituting the PHA molded body of the present application comprises a resin containing a 3-hydroxybutyrate structural unit, from the perspective of balancing the strength and productivity of the drawing process, the average content proportion of 3-hydroxybutyrate unit and other hydroxyalkanoate units (3-hydroxybutyrate unit/other hydroxyalkanoate units) among all monomer units constituting the poly(3-hydroxybutyrate) resin is 99/1 to 70/30 (mol%/mol%). It is found by research that when the content of 3-hydroxybutyrate in poly(3-hydroxybutyrate) resin is higher, for example, when the content ratio of 3-hydroxybutyrate is 89 mol% or more, preferably 94 mol% or more, the resin has a higher degree of crystallinity, a higher melting point, and a tendency not to be easily adhered, the molded body can be prepared at a low draw ratio, and the maximum ratio that can be stretched itself is also low, for example, it is also easy to be molded at a draw ratio of 1.0. Correspondingly, when the content of 3-hydroxybutyrate in poly(3-hydroxybutyrate) resin is lower, and the content ratio of 3-hydroxybutyrate is preferably 89 mol% or less, it tends to easily prepare a molded body with a high degree of Raman orientation which requires the preparation of molded body at a higher draw ratio.

The average content ratio refers to the molar ratio of each monomer unit among all monomer units that constitute the poly(3-hydroxybutyrate) resin. If the poly(3-hydroxybutyrate) resin is a mixture of two or more poly(3-hydroxybutyrate) resins, it refers to the molar ratio of each monomer unit contained in the entire mixture. A person skilled in the art can use known methods to measure the average content ratio of each monomer unit among all monomer units of poly(3-hydroxybutyrate) resin.

Generally, poly(3-hydroxybutyrate) resins with high crystallinity have excellent productivity but poor mechanical strength, while poly(3-hydroxybutyrate) resins with low crystallinity have excellent mechanical properties but poor productivity. When used combined with both resins, tensile strength and productivity can be improved. Therefore, the poly(3-hydroxybutyrate) resin is preferably a mixture of at least two types of poly(3-hydroxybutyrate) resins, wherein the types and/or contents of constituent monomers are different from each other. In this case, it is preferred that the PHA is a combination of at least one poly(3-hydroxybutyrate) with high crystallinity and one poly(3-hydroxybutyrate) with low crystallinity.

Preferably, the poly(3-hydroxybutyrate) comprises a polymer containing only a 3-hydroxybutyrate structural unit, or/and a copolymer of at least one 3-hydroxybutyrate structural unit with other structural units.

Preferably, the poly(3-hydroxybutyrate) is one or more selected from poly(3-hydroxybutyrate), poly(3-hydroxybutyrate-co-3-hydroxypropionate), poly(3-hydroxybutyrate-co-3-hydroxyvalerate)(abbreviation: P3HB3HV), poly(3-hydroxybutyrate-co-3-hydroxyvalerate-3-hydroxycaproate), poly(3-hydroxybutyrate-co-3-hydroxycaproate)(abbreviation: P3HB3HH), poly(3 -hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), poly(3-hydroxybutyrate-co-4-hydroxybutyrate)(abbreviation: P3HB4HB).

Particularly, from the aspect of processability and mechanical properties, it is preferred that the PHA is poly(3-hydroxybutyrate-co-3-hydroxycaproate).

In a specific embodiment, a person skilled in the art can add additives to the raw materials according to common knowledge.

Preferably, the raw material contains a nucleating agent. The addition of nucleating agents can improve processing efficiency by reducing the time required for PHAs to not adhere.

More preferably, the amount of the added nucleating agent in the raw material is 0.1% to 10% by weight. The specific non-limiting examples include 0.3%, 0.5%, 0.7%, 1%, 1.7%, 2%, 3%, 4%, 5%, 8%, 9%, and 10%. Excessive addition of nucleating agents will reduce the mechanical properties of PHAs.

More preferably, the nucleating agent is one or more selected from calcium carbonate, talcum powder, titanium dioxide, uracil, galactitol, zirconium hydrogen phosphate, amide compound, and boron nitride; wherein, the amide compound is one or more selected from N,N'-hexyl-1,6-bis[3-(3,5-di-tert-butyl-4-hydroxyphenyl)propionamide, tetramethylthiuram disulfide, tetramethylthioperoxydicarbonate diamide, N,N'-1,6-hexanediyl[N-(2,2,6,6-tetramethyl-4-piperidine)]-carboxamide, N,N'-1,2-ethanediylbis-Octadecanamide, (Z,Z)-N,N'-1,2-ethylenebis-9-octadecylamide, behenamide, stearamide, erucamide, oleic acid amide, stearyl erucamide, N,N'-bis(2,2,6,6-tetramethyl-4-piperidyl)-1,3-benzenedicarboxylamide, N,N-bis(hydroxyethyl)cocamide. In addition, the nucleating agent of the present application can also be selected from fatty alcohols or fatty acid nucleating agents, including medium and long chain fatty alcohols or medium and long chain fatty acids, such as octadecanol, octadecanoic acid, eicosanol, eicosanoic acid, docosanol, docosanoic acid, hexacosanol, hexacosanoic acid, triacontanol, and triacontanic acid.

The specific preparation method of the PHA molded body of the present application can be prepared by various thermal processing molding methods such as extrusion molding, injection molding, rolling molding, tape molding, blow molding, and biaxial stretching molded, and can also be prepared by non-thermal processing molding methods such as solution pouring. Preferably prepared by thermal processing molding methods.

The "processing" of the present application under the first temperature condition includes processing methods when preparing various molded bodies, such as heating, melting, and extrusion when preparing granular molded body; or heating, melting, blowing, or cast extrusion when preparing film molded body.

A person skilled in the art can combine the above solutions according to common knowledge to obtain preferred embodiments of the preparation method for the PHA molded body of the present application.

Furthermore, the present application also provides a PHA molded body, which is prepared by the preparation method.

Preferably, the PHA molded body is a film, fiber, straw, plate, or granule.

The PHA molded body preferably has a crystallinity of 5% or more, more preferably 10% or more, and further preferably 15% or more. Under certain temperature conditions, when the orientation parameter is high, the crystallinity of the molded body is high, and the prepared product is less prone to adhesion, or when the second temperature is within a more preferred range, and the second time is extended, the crystallinity of the molded body is high, and the prepared product is less prone to adhesion.

The higher the crystallinity of the PHA molded body, the higher the rigidity and surface roughness of the PHA molded body, and the less prone the surface of the molded body to adhesion.

The Raman orientation parameter of the PHA molded body is preferably 1.1 or more, more preferably 2.0 or more, and further preferably 2.3 or more. According to the present application, by regulating the Raman orientation parameter of the PHA molded bodies within the aforementioned range, the PHA molded bodies can reach a state without adhesion in a shorter molding time, thereby improving processing efficiency. The greater the draw ratio of the PHA molded body, the greater the Raman orientation parameter.

Based on the above technical solutions, the beneficial effects of the present application are as follows:
The PHA molded body and preparation method thereof provided by the present application can produce non-adhesive molded body by optimizing the processing technology, and the preparation method is simple and controllable, while the processing and production efficiency can be improved.

### Specific Modes for Carrying Out the Embodiments

The following examples are used to illustrate the present application but are not intended to limit the scope of the application thereto.

The endpoints and any values of ranges disclosed herein are not limited to the precise range or value, and these ranges or values should be understood to include values approaching such ranges or values. For numerical ranges, the endpoint values of each range, the endpoint values of each range, and the individual point values, as well as the individual point values, can be combined with each other to obtain one or more new numerical ranges. These numerical ranges should be deemed to be specifically disclosed herein.

If the specific techniques or conditions are not specified in the Examples, the techniques or conditions described in the literature, or the product manual in the art shall be followed. The reagents or instruments used without specifying the manufacturer are conventional products that can be purchased commercially through regular channels.

Equipment used:
Mixing equipment: a high-speed mixer is used for blending at room temperature.

Granulation equipment: commonly used extrusion granulation equipment in the art can be used, for example parallel co-rotating twin-screw extruders, parallel counter-rotating twin-screw extruders, conical twin-screw extruders with different length-to-diameter ratios, as well as single screw extruders or more; the composition was placed in the feeding hopper or the weightlessness steelyard of the twin-screw extruder; the temperature setting of the extrusion granulation equipment is within the range of 10°C to 60°C higher than the melting point of the PHA resin, and the main engine speed is 50 to 500 r/min, and the feeding amount or production capacity is adjusted according to the actual production status; subsequently, granulation is carried out using pelletizing method such as air-cooled drawn strip cutting, water bath drawn strip cutting, grinding thermal cutting, water ring cutting, and underwater cutting, and a water bath condition of 25°C to 100°C can be maintained during the production and processing process; and the prepared granules are dried using an air blast drying oven to eliminate the effect of moisture on granule properties, and allow the granules crystallize completely.

The testing methods used in the Examples are as follows: Raman orientation parameter = (I873 parallel/I1769 parallel)/(I873 perpendicular/I840 perpendicular);
wherein, I873 parallel: the intensity of Raman band at 873cm⁻¹ under the parallel condition;
I873 perpendicular: the intensity of Raman band at 873cm⁻¹ under perpendicular condition;
I1769 parallel: the intensity of Raman band at 1769cm⁻¹ under parallel condition;
I1769 perpendicular: the intensity of Raman band at 1769cm⁻¹ under perpendicular condition;
Parallel condition: parallel to the stretching direction of the molded body;
Perpendicular condition: perpendicular to the stretching direction of the molded body.

### Crystallinity

A differential scanning calorimeter (DSC25 model, TA Instrument) was used, 2 to 10 mg of the PHA molded bodies was heated from -50°C to 180°C at a heating rate of 10°C/min, and the heating melting enthalpy and cold crystallization enthalpy were obtained through integration with TA software. Crystallinity = 100% × (melting enthalpy - cold crystallization enthalpy)/100% crystallization melting enthalpy.

### Weight average molecular weight

A gel permeation chromatograph (HPLC GPC system, Shimadzu Manufacturing Co., Ltd.) using a chloroform solution was used and determined through polystyrene conversion. As the chromatographic column in the gel permeation chromatograph, a chromatographic column suitable for measuring the weight average molecular weight can be used.

The average content ratio of each monomer in the entire composition of PHAs can be determined by methods well-known to a person skilled in the art.

### Adhesion test

Two or more PHAs molded bodies were stacked for 1 minute, and a pressure of 5kg was applied. If the PHA molded bodies do not adhere to themselves, they will pass the adhesion test.

The raw materials used in the Examples and Comparative Examples are as follows:

### <PHA resin>

A-1: Poly(3-hydroxybutyrate-co-3-hydroxyhexanoate), Beijing Bluepha Microbiology Technology Co., Ltd.; the content of 3HB(3-hydroxybutyrate unit) is 89%, and the weight average molecular weight is approximately 100,000 to 800,000.

A-2: Poly(3-hydroxybutyrate-co-3-hydroxycaproate), Beijing Bluepha Microbiology Technology Co., Ltd.; the content of 3HB(3-hydroxybutyrate unit) is 94%; and the weight average molecular weight is approximately 100,000 to 800,000.

### Nucleating agent

B-1: Behenamide, Jiangxi Zhilian Plasticization Technology Co., Ltd.

B-2: Stearylamide, Jiangxi Zhilian Plasticization Technology Co., Ltd.

The production method includes the following steps:
Step 1. Mixing: the raw materials were mixed at a mixing speed of 200 r/min for a mixing time of 5 min; after mixing, the mixture was placed in the discharging hopper of the twin-screw extruder;
Step 2. Extrusion: the conditions for the extrusion granulation equipment were set, and extrusion was performed under the condition that the melt temperature is the first temperature (10°C to 60°C higher than the melting point of PHA resins); poly(3-hydroxybutyrate-co-3-hydroxyhexanoate), referred to as PHBH, has a melting point of 137°C; and
Step 3. Granulation cooling: a method of water bath drawn strip cutting was used, the water bath temperature T of the water tank is the second temperature (above the glass transition temperature of the PHA resin and below the melting point, preferably 25°C to 100°C, more preferably 40°C to 80°C), and the draw ratio of the second temperature can be controlled by controlling the traction speed and the difference in the traction speed of each roller. The heating time of the second temperature can be controlled by controlling the traction speed and the length of the water tank for the water bath. During the preparation process, under the second temperature condition, the draw ratio is 1.0 times or more, and the heating time at the second temperature is 10 s or more; and at least one of the following requirements are met: 1) the draw ratio is 3.0 times or more; and 2) the heating time at the second temperature is 30 s or more.

Then, various performance tests were conducted on the obtained sample, and the results were gradually presented and analyzed through the following experimental examples.

The present application provides a method for preparing a PHA molded body that is not prone to adhesion, comprising:
a first step, the PHA raw materials were mixed using a mixer;
a second step, the mixed raw materials were extruded under the condition that the melt temperature is the first temperature (10°C to 60°C higher than the melting point of the PHA resin); and
a third step, stretching was conducted under the condition that the water bath heating temperature T (i.e. the second temperature) of the water tank is above the glass transition temperature of the PHA resin and below the melting point of the PHA resin (preferably 25°C to 100°C, more preferably 40°C to 80°C), the draw ratio at the second temperature was controlled to be 1.0 times or more, and the heating time at the second temperature was controlled to be 10 s or more; and at least one of the following requirements were met: 1) The draw ratio is 3.0 times or more; and 2) the heating time at the second temperature is 30 s or more; and a non-adhesive molded body can be obtained.

Wherein, heating was performed at the first temperature and molding was performed after melting to form a PHA molded body; and cooling and stretching was performed at the temperature T (i.e. the second temperature) of the melting point of the molded body which is between the glass transition temperature to the melting point temperature, to prevent the molded body from adhering. The lower the first temperature, the shorter the time required for the molded body to avoid adhesion at the second temperature. The higher the first temperature, the higher the fluidity of PHAs, which is beneficial for molding. Preferably, the first temperature is 10°C to 60°C higher than the melting point of PHA. The second temperature affects the time required for the PHA molded body to reach a non-adhesive state and is preferably between 25°C to 100°C.

**Table 1**

| Experiment No. | 1.1 | 1.2 (Comparativ e Example) | 1.3 (Comparativ e Example) | 1.4 | 1.5 (Comparativ e Example) | 1.6 | 1.7 | 1.8 | 1.9 |
|---|---|---|---|---|---|---|---|---|---|
| Proportion | | | | | | | | | |
| A-1 | | | | | | | 99.3 | 99.3 | 99.3 |
| A-2 | 100 | 100 | 100 | 100 | 100 | 99.3 | | | |
| B-1 | | | | | | 0.7 | 0.7 | 0.7 | 0.7 |

| Processing parameters | | | | | | | | | |
|---|---|---|---|---|---|---|---|---|---|
| First temperature(°C) | 165 | 165 | 165 | 165 | 165 | 165 | 165 | 165 | 165 |
| Second temperature(°C) | 25 | 25 | 25 | 25 | 25 | 25 | 40 | 80 | 60 |
| Heating time at the second temperature (s) | 30 | 25 | 15 | 15 | 8 | 10 | 30 | 30 | 30 |
| Draw ratio at the second temperature | 1 | 1 | 1 | 3 | 3 | 3 | 3 | 3 | 3 |

| Physical properties | | | | | | | | | |
|---|---|---|---|---|---|---|---|---|---|
| Crystallinity(%) | 45 | 41 | 40 | 45 | 37 | 43 | 7 | 8 | 15 |
| Orientation | 1.1 | 1.1 | 1.1 | 2.3 | 1.9 | 2.3 | 2.4 | 2.4 | 2.3 |
| Adhesion test | non-adhesive | adhesive | adhesive | non-adhesive | adhesive | non-adhesive | non-adhesive | non-adhesive | non-adhesive |

In some examples, as shown in Table 1 above, according to the method of the present application, the non-adhesive effect can be achieved when the second temperature is greater than or equal to 25°C and meets at least one of the requirements that "the draw ratio is 3.0 times or more" or "the heating time at second temperature is 30 s or more". When the above conditions are not met in Experiment Nos. 1.2, 1.3 and 1.5, adhesion occurs.

At the same time, when the second temperature is constant, as the draw ratio increases, the heating time at the second temperature becomes shorter. For example, in Experiment Nos. 1.1 and 1.4: in the case that the second temperature is 25°C, and the draw ratio of the second temperature is 3, the heating time at the second temperature can be shortened to 15 s.

**Table 2**

| Experiment No. | 2.1 (Comparative Example) | 2.2 | 2.3 | 2.4 | 2.5 | 2.6 | 2.7 (Comparative Example) | 2.8 (Comparativ e Example) |
|---|---|---|---|---|---|---|---|---|
| Proportion | | | | | | | | |
| A-1 | 99.3 | 99.3 | 99.3 | 99.3 | 99.3 | 99.3 | 99.3 | 99.3 |
| B-1 | 0.7 | 0.7 | 0.7 | 0.7 | 0.7 | 0.7 | 0.7 | 0.7 |

| Processing parameters | | | | | | | | |
|---|---|---|---|---|---|---|---|---|
| First temperature(°C) | 165 | 165 | 165 | 165 | 165 | 165 | 165 | 165 |
| Second temperature(°C) | 60 | 60 | 60 | 60 | 60 | 60 | 60 | 60 |
| Heating time at the second temperature (s) | 15 | 60 | 30 | 15 | 10 | 10 | 8 | 8 |
| Draw ratio at the second temperature | 1 | 1 | 1.5 | 3 | 6 | 10 | 6 | 10 |

| Physical properties | | | | | | | | |
|---|---|---|---|---|---|---|---|---|
| Crystallinity(%) | 5 | 15 | 5 | 6 | 7 | 10 | 5 | 5 |
| Orientation | 1.1 | 1.1 | 2 | 2.3 | 3.1 | 3.5 | 2.9 | 3.1 |
| Adhesion test | adhesive | non-adhesive | non-adhesive | non-adhesive | non-adhesive | non-adhesive | adhesive | adhesive |

In some examples, as shown in Table 2 above, the higher the draw ratio, the more time required for the second temperature can be reduced to 10 s or more. It was also found that when the draw ratio is increased to 6 times or even 10 times or more, if the heating time at the second temperature was lower than 10 s, adhesion appeared in the prepared molded body, such as in Experiment Nos. 2.7 and 2.8 as shown in Table 2. Preferably, when the draw ratio at the second temperature is greater than 3.0, the heating time at the second temperature is 10 s or more. Similarly, as shown in the above table, when the heating time at the second temperature is extended, the draw ratio during the processing can be reduced. Preferably, when the heating time at the second temperature is 60 s or more, the draw ratio at the second temperature is greater than or equal to 1.0.

**Table 3**

| Experiment No. | 3.1 (i.e., 1.7) | 3.2 (i.e., 1.8) | 3.3 | 3.4 (i.e., 1.9) | 3.5 (Comparativ e Example) | 3.6 | 3.7 (Comparativ e Example) | 3.8 (Comparative Example) |
|---|---|---|---|---|---|---|---|---|
| A-1 | 99.3 | 99.3 | 99.3 | 99.3 | 99.3 | 99.3 | 99.3 | 99.3 |
| B-1 | 0.7 | 0.7 | 0.7 | 0.7 | 0.7 | 0.7 | 0.7 | 0.7 |

| Processing parameters | | | | | | | | |
|---|---|---|---|---|---|---|---|---|
| First temperature(°C) | 165 | 165 | 165 | 165 | 165 | 165 | 165 | 165 |
| Second temperature(°C) | 40 | 80 | 60 | 60 | 60 | 60 | 60 | 60 |
| Heating time at the second temperature (s) | 30 | 30 | 30 | 30 | 15 | 60 | 15 | 15 |
| Draw ratio at the second temperature | 3 | 3 | 1.5 | 3 | 1 | 1 | 1.5 | 2.0 |

| physical properties | | | | | | | | |
|---|---|---|---|---|---|---|---|---|
| Crystallinity(%) | 7 | 8 | 5 | 15 | 5 | 15 | 4 | 4 |
| Orientation | 2.4 | 2.4 | 2 | 2.3 | 1.1 | 1.1 | 1.2 | 1.3 |
| Adhesion test | non-adhesive | non-adhesive | non-adhesive | non-adhesive | adhesive | non-adhesive | adhesive | adhesive |

In some examples, under the condition that the second temperature is preferably 40°C to 80°C, the draw ratio of the second temperature is controlled at 1.5 times or more, and the molded body produced by processing will not adhere. As shown in Table 3, when the second temperature is between 40°C to 80°C, the heating time at the second temperature is 30 s or more, and the draw ratio is greater than or equal to 1.5, no adhesion will occur. At the same time, it was also verified that the molded body prepared under conditions outside the scope of the present application is adhesive, such as in Experiment Nos. 3.7 and 3.8 as shown in Table 3, when the draw ratio and the heating time of the second temperature are 1.5 times and 15 s, and 2.0 times and 15 s, respectively, the prepared molded body is adhesive.

In some examples, the higher the draw ratio during the preparation process, the larger the orientation parameter of the prepared molded body, and the less adhesive the prepared molded body. It is found by research that when the draw ratio is higher, the time required to process the prepared molded body is shorter, and at the same time, the prepared molded body has a higher orientation and is less prone to adhesion. Through the above-mentioned optimized processing process, a non-adhesive molded body can be produced, and the preparation method is simple and controllable, at the same time, the processing and production efficiency can be improved. As shown in Table 4, preferably, the draw ratio is 1.5 or more, and the orientation degree is 2.0 or more.

**Table 4**

| Experiment No. | 4.1 | 4.2 | 4.3 |
|---|---|---|---|
| Proportion | | | |
| A-1 | 99.3 | 99.3 | 99.3 |
| B-1 | 0.7 | 0.7 | 0.7 |

| Processing parameters | | | |
|---|---|---|---|
| First temperature (°C) | 165 | 165 | 165 |
| Second temperature(°C) | 60 | 60 | 60 |
| Heating time at the second temperature (s) | 30 | 30 | 30 |
| Draw ratio at the second temperature | 1.5 | 3 | 6 |

| Physical properties | | | |
|---|---|---|---|
| Crystallinity (%) | 5 | 15 | 18 |
| Orientation degree | 2 | 2.3 | 3.1 |
| Adhesion test | non-adhesive | non-adhesive | non-adhesive |

In some examples, when other auxiliary agents, such as nucleating agents, are added, non-adhesion can be achieved faster under the same heating temperature and draw ratio conditions, that is, the heating time of the second temperature is shorter, thereby improving production efficiency faster. For example, in the examples with Experiment Nos. 1.4 and 1.6, when the condition that the second temperature is 25°C and the draw ratio is 3, the time required for obtaining a non-adhesive molded body without the addition of nucleating agent B-1 in Experiment No. 1.4 is 15 s, and the heating time at the second temperature of the resin body with the addition of nucleating agent in Experiment No. 1.6 can be shortened to 10 s.

In some examples, as shown in Table 5, when different nucleating agents and different amounts of a certain nucleating agent are used, the orientation parameters of the molded body do not change under the same draw ratio. That is, the addition of nucleating agents does not affect the orientation parameters of the molded body, but promotes the crystallization of the molded body and makes it non-adhesive.

**Table 5**

| Experiment No. | | 5.1 | 5.2 | 5.3 | 5.4 | 5.5 |
|---|---|---|---|---|---|---|
| Proportion | | | | | | |
| | A-1 | 99.7 | 99.3 | 98.3 | 90 | 99 |
| | B-1 | 0.3 | 0.7 | 1.7 | 10 | |
| | B-2 | | | | | 1 |

| Processing parameters | | | | | | |
|---|---|---|---|---|---|---|
| First temperature (°C) | | 165 | 165 | 165 | 165 | 165 |
| Second temperature (°C) | | 60 | 60 | 60 | 60 | 60 |
| Heating time at the second temperature (s) | | 30 | 30 | 30 | 30 | 30 |
| Draw ratio at the second temperature | | 3 | 3 | 3 | 3 | 3 |

| physical properties | | | | | | |
|---|---|---|---|---|---|---|
| Crystallinity (%) | | 8 | 15 | 10 | 10 | 5 |
| Orientation | | 2.3 | 2.3 | 2.3 | 2.3 | 2.3 |
| Adhesion test | | non-adhesive | non-adhesive | non-adhesive | non-adhesive | non-adhesive |

The present application also includes a molded body prepared by the above processing method, which can be prepared by various thermal processing molding methods such as extrusion molding, injection molding, rolling molding, tape molding, blow molding, and biaxial stretching molded, and can also be prepared by non-thermal processing molding methods such as solution pouring. The prepared molded body includes but is not limited to granules, films, sheets, straws, and bottles.

For example, a thin film molded body was prepared using the molding method of thermal processing.

Film production equipment: commonly used film-making or tube-making equipment in the art, such as single-layer or multi-layer film-blowing machines, were used, and the temperature of the screw and head was set to the first temperature (10°C to 60°C higher than the melting point of PHA resins). Before rolling, the prepared thin film was crystallized online using a drying tunnel under conditions above the glass transition temperature and below the melting point of the PHA resin, preferably 25°C to 100°C, and more preferably 40°C to 80°C.

In this example, as shown in Tables 1 to 5 above, the crystallinity of the molded body is 5% or more, more preferably 10% or more, and further preferably 15% or more. Under certain temperature conditions, when the orientation parameter is high, the crystallinity of the molded body is high, and the prepared product is less prone to adhesion; or when the second temperature is within a more preferred range and the second time is extended, the crystallinity of the molded body is high, and the prepared product is less prone to adhesion. It has also been verified here that the higher the crystallinity of the PHA molded body, the higher the rigidity and surface roughness of the PHA molded body, and the less prone the surface of the molded body to adhesion.

As shown in Tables 1 to 5, the Raman orientation parameters of the prepared molded body are 1.1 or more, more preferably 2.0 or more, and further preferably 2.3 or more. According to the present application, by regulating the Raman orientation parameters of the PHA molded body within the aforementioned range, the PHA molded body can achieve a state without adhesion in a shorter molding time, thereby improving processing efficiency. The greater the draw ratio of the PHA molded body, the greater the Raman orientation parameter. When exploring the relationship between the draw ratio and the heating time at the second temperature, the applicant also uses PHAs with other structural units for research. The following raw materials are also used:
A-3: Poly(3-hydroxybutyrate-co-3-hydroxyvalerate) (P3HB3HV), has a weight average molecular weight of approximately 100,000-800,000.
A-4: Poly(3-hydroxybutyrate-co-4-hydroxybutyrate) (P3HB4HB), has a weight average molecular weight of approximately 100,000-800,000.

By using the same method as mentioned above to prepare a granular molded body, the specific processing parameters and physical property values of the molded body are shown in the table below:

**Table 6**

| Experiment No. | 6.1 | 6.2 | 6.3 | 6.4 | 6.5 | 6.6 |
|---|---|---|---|---|---|---|
| A-1 | 50 | 80 | 25 | | | |
| A-2 | 50 | 20 | 75 | | 50 | |
| A-3 | | | | 100 | 50 | 50 |
| A-4 | | | | | | 50 |
| B-1 | 0.7 | 0.7 | 0.7 | 0.7 | 0.7 | 0.7 |

| Processing parameters | | | | | | |
|---|---|---|---|---|---|---|
| First temperature (°C) | 165 | 165 | 165 | 165 | 165 | 165 |
| Second temperature (°C) | 50 | 50 | 50 | 50 | 50 | 50 |
| Heating time at the second temperature (s) | 30 | 30 | 10 | 10 | 15 | 15 |
| Draw ratio at the second temperature | 1 | 1 | 3 | 3 | 3 | 3 |

| physical properties | | | | | | |
|---|---|---|---|---|---|---|
| Crystallinity (%) | 29 | 40 | 13 | 10 | 11 | 10 |
| Orientation | 1.2 | 1.3 | 2.3 | 2.4 | 2.3 | 2.3 |
| Adhesion test | non-adhesive | non-adhesive | non-adhesive | non-adhesive | non-adhesive | non-adhesive |

The results show that under the condition of the second temperature of 50°C, as shown in Examples 6.1 to 6.2, the draw ratio is 1 time, and the heating time at the second temperature is 30s; as shown in Examples 6.3 to 6.4, the draw ratio is 3 times, and the heating time at the second temperature is 10 s, and as shown in Examples 6.5 to 6.6, the draw ratio is 3 times, the heating time at the second temperature is 15 s, and the molded body prepared is non-adhesive. That is to say, for the use of PHAs of different monomers, and the combination of these PHAs within the scope of examples of the present application, non-adhesive molded bodies can also be prepared.

Finally, it should be noted that the above examples are only used to illustrate the technical solution of the present application and are not intended to limit the same. Although the present application has been described in detail with reference to the aforementioned examples, those skilled in the art should understand that they can still modify the technical solutions recited in the aforementioned examples or make equivalent substitutions for some of the technical features. These modifications or substitutions do not depart the essence of the corresponding technical solutions from the spirit and scope of the technical solutions of each example of the present application.

### Industrial Applicability

The present application provides a molded body of PHA and a preparation method thereof. The preparation method comprises: mixing PHA raw materials, processing at a first temperature, and stretching at a second temperature. Wherein, the first temperature is 10°C to 60°C higher than the melting point of the PHA resin; The second temperature is above the glass transition temperature of the PHA resin and below the melting point of the PHA resin. During the preparation process, under the second temperature condition, it is necessary to meet the following requirements: the draw ratio is 1.0 times or more, and the heating time condition is 30 s or more; or the draw ratio is 3.0 times or more, and the heating time condition is 10 s or more. The present application can produce non-adhesive molded bodies by optimizing the processing process, and the preparation method is simple and controllable. At the same time, the processing and production efficiency can be improved with good economic value and application prospects.

## Claims

1. A preparation method for a polyhydroxyalkanoate molded body, wherein,
the preparation method comprises: mixing polyhydroxyalkanoate raw materials, processing at a first temperature, and stretching at a second temperature; wherein, the first temperature is 10°C to 60°C higher than the melting point of polyhydroxyalkanoate resin; and the second temperature refers to a temperature above the glass transition temperature of the polyhydroxyalkanoate resin and below the melting point of the polyhydroxyalkanoate resin;
stretching under the conditions of the second temperature must meet the following requirements: a draw ratio of 1.0 times or more, and a heating time under the second temperature condition of 30 s or more;
or,
a draw ratio of 3.0 times or more, and a heating time under the second temperature condition of 10 s or more.

2. The preparation method for a polyhydroxyalkanoate molded body of claim 1, wherein the second temperature is 25°C to 100°C.

3. The preparation method for a polyhydroxyalkanoate molded body of claim 2, wherein during the preparation process:
the draw ratio is 1.0 times or more, and the heating time at the second temperature is 30 s or more;
or,
the draw ratio is 3.0 times or more, and the heating time at the second temperature is 15 s or more.

4. The preparation method for a polyhydroxyalkanoate molded body of claim 3, wherein the second temperature is 40°C to 80°C, and during the preparation process:
the draw ratio is 1.0 times or more, and the heating time at the second temperature is 60 s or more;
or,
the draw ratio is 1.5 times or more, and the heating time at the second temperature is 30 s or more;
or,
the draw ratio is 3.0 times or more, and the heating time at the second temperature is 10 s or more.

5. The preparation method for a polyhydroxyalkanoate molded body of any one of claims 1 to 4, wherein the polyhydroxyalkanoate contains a 3-hydroxyalkanoate structural unit and/or a 4-hydroxyalkanoate structural unit.

6. The preparation method for a polyhydroxyalkanoate molded body of claim 5, wherein the polyhydroxyalkanoate contains a 3-hydroxybutyrate structural unit.

7. The preparation method for a polyhydroxyalkanoate molded body of claim 6, wherein the poly(3-hydroxybutyrate) comprises: a polymer containing only a 3-hydroxybutyrate structural unit, or/and a copolymer of at least one 3-hydroxybutyrate structural unit and other structural units.

8. The preparation method for a polyhydroxyalkanoate molded body of claim 7, wherein the poly(3-hydroxybutyrate) is one or more selected from poly(3-hydroxybutyrate), poly(3-hydroxybutyrate-co-3-hydroxypropionate), poly(3-hydroxybutyrate-co-3-hydroxyvalerate), poly(3-hydroxybutyrate-co-3-hydroxyvalerate-3-hydroxycaproate), poly(3-hydroxybutyrate-co-3-hydroxycaproate), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate).

9. The preparation method for a polyhydroxyalkanoate molded body of any one of claims 6 to 8, wherein during the preparation process, a nucleating agent is also added to the polyhydroxyalkanoate raw material, and the amount of the added nucleating agent accounts for 0.1% to 10% of the total mass.

10. A polyhydroxyalkanoate molded body, wherein the polyhydroxyalkanoate molded body is prepared by the preparation method of any one of claims 1 to 9.
